# EUROPÄISCHE PATENTSCHRIFT

(11) **EP 1 954 528 B1**
(45) Veröffentlichungstag und Bekanntmachung des Hinweises auf die Patenterteilung: **14.04.2010**
(21) Anmeldenummer: 06819157.6
(22) Anmeldetag: 26.10.2006
(51) Int. Cl.: B60R 1/00

(54) **VERFAHREN ZUR STEUERUNG DER GESICHTSFELDGRÖßE EINES VIDEOSYSTEMS UND VIDEOSYSTEM FÜR EIN KRAFTFAHRZEUG**
METHOD FOR CONTROLLING THE FIELD VIEW SIZE OF A VIDEO SYSTEM, AND A VIDEO SYSTEM FOR A MOTOR VEHICLE
PROCEDE DE COMMANDE DE LA TAILLE DU CHAMP DE VISION D'UN SYSTEME VIDEO ET SYSTEME VIDEO POUR VEHICULE AUTOMOBILE

(30) Priorität: 21.11.2005 DE 102005055350
(43) Veröffentlichungstag der Anmeldung: 13.08.2008
(73) Patentinhaber: ROBERT BOSCH GMBH, 70442 Stuttgart (DE)
(72) Erfinder: NIXDORF, Bernhard, 70469 Stuttgart (DE); HILD, Heiner, 71642 Ludwigsburg (DE)
(86) Internationale Anmeldenummer: PCT/EP2006/067816
(87) Internationale Veröffentlichungsnummer: WO 2007/057283

(56) Entgegenhaltungen:
- DE-A1- 10 200 936
- FR-A1- 2 785 434

## Beschreibung

Die Erfindung betrifft ein Verfahren zur Steuerung der Gesichtsfeldgröße eines Videosystems mit einer Videokamera in einem Kraftfahrzeug und ein Videosystem für ein Kraftfahrzeug.

### Stand der Technik

Durch WO 02/36389 A1 und WO 03/064213 A1 sind Infrarot-Nachtsichtgeräte für Kraftfahrzeuge bekannt geworden, bei denen die Gesichtsfeldgröße, gegebenenfalls auch die Richtung des Gesichtsfeldes, in Abhängigkeit von der Fahrzeuggeschwindigkeit und anderen Informationen, beispielsweise Umgebungsdaten, gesteuert wird. Umgebungsdaten können beispielsweise mit speziellen Sensoren erfasst werden und betreffen unter anderem das Wetter, beispielsweise ob Schnee oder Regen vorliegt. Außerdem kann die Richtung des Gesichtsfeldes bei den bekannten Geräten durch geeignete Sensoren an den Straßenverlauf angepasst werden.

Außer zur Nachtsichtunterstützung sind Videosysteme mit anderen Funktionen bekannt geworden, beispielsweise als Warnung vor einem unbeabsichtigten Verlassen der Fahrspur (Lane Departure Warning = LDW), Warnung vor Hindernissen und Erkennung von Verkehrszeichen. Ein wichtiger Parameter bei der Auslegung derartiger Videosysteme ist das Gesichtsfeld der Videokamera, für das je nach Funktion gegebenenfalls eine andere Größe zu wählen ist. Dabei ist in der Regel ein Kompromiss zwischen einem möglichst großen Gesichtsfeld und einer genügend hohen Auflösung zu finden, so dass Objekte durch den Fahrer oder durch eine automatische Objektdetektion im Bild gefunden und erkannt werden können.

DE 102 00 936 A offenbart ein Verfahren gemäß dem Oberbegriff des Anspruchs 1 und ein Videosystem gemäß dem Oberbegriff des Anspruchs 7.

### Vorteile der Erfindung

Aufgabe der vorliegenden Erfindung ist es, die Steuerung der Gesichtsfeldgröße derart vorzunehmen, dass ein Videosystem für verschiedene Funktionen optimierbar ist.

Diese Aufgabe wird bei dem erfindungsgemäßen Verfahren mit den Merkmalen des Anspruchs 1.

Die Einstellung der Gesichtsfeldgröße kann bei dem erfindungsgemäßen Verfahren entweder durch Steuerung der Brennweite des Objektivs der Videokamera (sogenannter optischer Zoom) oder durch Auslesen des ganzen oder eines Ausschnitts aus dem Bildsensor der Videokamera oder einem nachgeordneten Speicher (sogenannter elektronischer Zoom) vorgenommen werden. Ein elektronischer Zoom hat den Vorteil, dass keine mechanisch bewegten Teile erforderlich sind und bei Gesichtsfeldern, die kleiner als die durch den Bildsensor bedingte Maximalgröße sind, ohne zusätzlichen Aufwand ein Neigen und Schwenken möglich ist. Voraussetzung ist allerdings, dass der Bildsensor eine genügend große Auflösung aufweist, so dass auch bei geringer Gesichtsfeldgröße relevante Objekte erkannt werden können.

Als Eingangsgrößen kommen alle Größen in Frage, welche eine Veränderung der Gesichtsfeldgröße sinnvoll bewirken können. Dies sind beispielsweise die Fahrzeuggeschwindigkeit, die Fahrzeuggierrate, der Lenkwinkel, die Lenkwinkelrate, die Beleuchtungsverhältnisse, der Straßenzustand, Sichtverhältnisse, Kurvenradius und Straßentyp.

Zur Bereitstellung solcher Größen kann bei dem erfindungsgemäßen Verfahren vorgesehen sein, dass mindestens eine Eingangsgröße einem Datensystem des Kraftfahrzeugs entnommen wird und/oder dass mindestens eine Eingangsgröße von Sensoren zugeführt wird und/oder dass mindestens eine Eingangsgröße von einem Bildauswertungssystem aus den aufgenommenen Bildern gewonnen wird.

Eine Verarbeitung der Eingangsgrößen zu eine Fahrsituation und der Informationen über die Funktionen des Videosystems bei dem erfindungsgemäßen Verfahren erfolgt dadurch, dass aus mehreren Eingangsgrößen durch vorgegebene Bewertungsfunktionen eine Fahrsituation abgeleitet wird und dass mit der Fahrsituation für verschiedene Funktionen des Videosystems je eine Steuergröße für die Gesichtsfeldgrößc ausgewählt wird. Hierbei ist vorgesehen, dass die Fahrsituation als Funktion der Eingangsgrößen aus einer ersten Tabelle ausgelesen wird und dass die Steuergröße als Funktion der Fahrsituation aus einer zweiten Tabelle ausgelesen wird.

Bei dem erfindungsgemäßen Videosystem wird die Aufgabe durch die Merkmale des Anspruchs 7 gelöst.

### Zeichnung

Ein Ausführungsbeispiel der Erfindung ist in der Zeichnung anhand mehrerer Figuren dargestellt und in der nachfolgenden Beschreibung näher erläutert. Es zeigt:
- Fig.: 1 ein Blockschaltbild eines erfindungsgemäßen Videosystems,

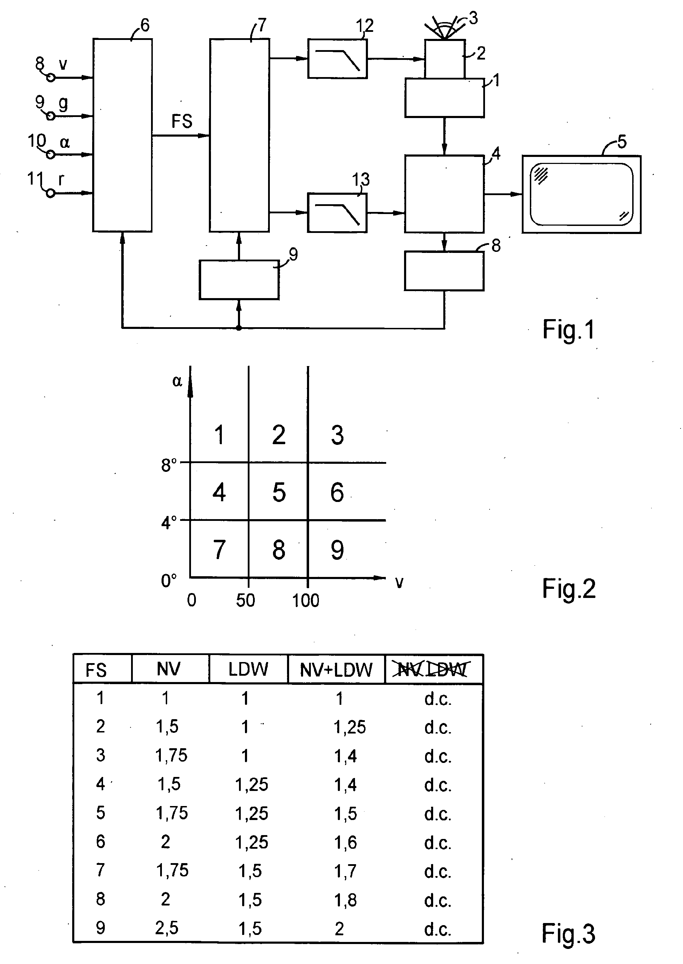

- Fig. 2: die Ableitung der Fahrsituation aus dem Lenkwinkel α und der Geschwindigkeit v und
- Fig.: 3 eine Tabelle, nach der aus der Fahrsituation in Abhängigkeit von der jeweils aktivierten Funktion eine Steuergröße für die Gesichtsfeldgröße erzeugt wird.

### Beschreibung des Ausführungsbeispiels

Das Blockschaltbild nach Fig. 1 zeigt eine Videokamera 1 mit einem Zoom-Objektiv 2 und angedeutete verschiedene Gesichtsfelder 3. Die Ausgangssignale der Videokamera 1 werden dem Bildbearbeitungssystem 4 zugeführt, in welchem unter anderem auch ein sogenannter digitaler Zoom vorgesehen ist, nämlich die Bildung eines Ausschnitts aus dem aufgenommenen Bild. An das Bildbearbeitungssystem 4 ist ein Bildwiedergabegerät 5, beispielsweise ein LCD-Display, angeschlossen. Dieses kann auch Teil eines sogenannten Head-up-Displays sein. Ferner können die Ausgangsdaten des Bildbearbeitungssystems 4 einer Bildauswertung 8 zugeführt werden, welche die Bilddaten auswertet und einer Videofunktion 9, beispielsweise LDW (lane departure waming) und Verkehrszeichenspeicher, geeignete Daten übermittelt.

In einem Block 6 erfolgt eine Schätzung bzw. Ableitung der Fahrsituation FS, die an einen weiteren Block 7 zur Bestimmung der Steuergröße weitergeleitet wird. Der Block 6 kann viele Eingangsgrößen erhalten, welche die Fahrsituation beschreiben. Als Beispiele sind hier vier Eingänge 8 bis 11 dargestellt zur Zuführung der Geschwindigkeit v von einem Tachometer, der Gierrate g von einem Inertialsensor, der Lenkwinkel α von einem Sensor an der Lenkung und beispielsweise Informationen aus einer digitalen Karte über den Kurvenradius r.

Des Weiteren werden dem Block 6 von einem Bildauswertungssystem 8 weitere Daten zugeführt, beispielsweise über die Beleuchtungsverhältnisse oder die Sichtweite. Ist das Kraftfahrzeug mit einem LDW-System ausgestattet, kann das Bildauswertungssystem 8 auch einen Kurvenradius ermitteln. Sollten von mehreren Quellen Daten zu gleichen Größen, beispielsweise Fahrgeschwindigkeit, Kurvenradius, Straßentyp, eintreffen, so kann eine Verbesserung der Eingangsdaten durch Datenfusion oder eine Plausibilitätsprüfung erfolgen.

Zur Auswahl eines geeigneten Gesichtsfeldes wird dem Block 7 ein Steuersignal zugeführt, das angibt, welche auf dem Kamerasystem aufsetzenden Funktionen jeweils aktiv sind, beispielsweise ob das Kamerasystem als Nachtsichtsystem oder als LDW-System verwendet wird oder gegebenenfalls beide Funktionen gleichzeitig aufweist.

Die Figuren 2 und 3 zeigen die Verarbeitung der Informationen zur Fahrsituation an einem Beispiel eines kombinierten Nachtsicht/Spurabweichungswarnsystem. Dabei soll die Gesichtsfeldgröße in Abhängigkeit von der Fahrzeuggeschwindigkeit v und vom Lenkwinkel α eingestellt werden. Für die beiden Teilfunktionalitäten NV (= Night Vision) und LDW herrschen folgende Präferenzen:
NV:
   1. Bei höheren Geschwindigkeiten soll die Vorausschauweite durch ein geringes Gesichtsfeld, d. h. durch eine Telestellung des Zooms, erhöht werden;
   2. bei Kurvenfahrten soll das Gesichtsfeld vergrößert werden, um "in die Kurve hineinsehen" zu können.
LDW:
   1. Die Vorausschauweite soll unabhängig von der Geschwindigkeit immer gleich sein;
   2. bei Kurvenfahrten soll das Gesichtsfeld vergrößert werden, um "in die Kurve hineinsehen" zu können. Dabei muss die Vergrößenung des Gesichtsfeldes nur so groß sein, dass eine geeignete Vorausschauweite für die Spurerkennung erreicht wird.

Fig. 2 zeigt eine mögliche Abbildungsfunktion des Blockes 6 (Fig. 1). Dabei wird die Fahrzeuggeschwindigkeit v und der Lenkwinkel α durch Einführung von Schwellwerten diskretisiert, so dass sich neun mögliche Kombinationen von Wertebereichen, d. h. neun Werte der Fahrsituation, ergeben. Die Quantisierung der Eingangsgrößen v und α kann zu plötzlichen Wechseln der Gesichtsfeldgröße führen, insbesondere wenn eine solche Eingangsgröße ständig um eine Quantisierungsschwelle schwankt. Um dies zu verhindern, können zwischen dem Block 7 und dem Zoom-Objektiv 2 bzw. dem Bildbearbeitungssystem 4 geeignete Filter, insbesondere Tiefpassfilter 12, 13, eingefügt werden. Es sind jedoch auch andere Filter denkbar, beispielsweise adaptive Tiefpässe, deren Grenzfrequenz bei schnellen starken Veränderungen der Eingangsgrößen heraufgesetzt wird, oder Amplitudenfilter mit Hysterese-Eigenschaften.

Fig. 3 zeigt die Funktion des Blocks 7, wobei in Abhängigkeit von der Fahrsituation FS für verschiedene Funktionen NV, LDW und NV+LDW die Steuergröße ausgegeben wird. In der rechten Spalte ist der Fall angegeben, dass beide Funktionen deaktiviert sind. Deshalb ist der Inhalt dieser Spalte beliebig bzw. mit d.c. (= don't care) besetzt.

## Patentansprüche

1. Verfahren zur Steuerung der Gesichtsfeldgröße eines Videosystems mit einer Videokamera in einem Kraftfahrzeug, wobei die Gesichtsfeldgröße in Abhängigkeit von verschiedenen Funktionen des Videosystems gesteuert wird, **dadurch gekennzeichnet, dass** aus mehreren Eingangsgrößen durch vorgegebene Bewertungsfunktionen eine Fahrsituation abgeleitet wird und dass mit der abgeleiteten Fahrsituation für verschiedene Funktionen des Videosystems je eine Steuergröße für die Gesichtsfeldgröße ausgewählt wird, wobei die abgeleitete Fahrsituation als Funktion der Eingangsgrößen aus einer ersten Tabelle ausgelesen wird und dass die Steuergröße als Funktion der Fahrsituation aus einer zweiten Tabelle ausgelesen wird.

2. Verfahren nach Anspruch 1, **dadurch gekennzeichnet, dass** ferner eine Abhängig keit von mindestens einer Kombination von Funktionen besteht.

3. Verfahren nach einem der Ansprüche 1 oder 2, **dadurch gekennzeichnet, dass** die Gesichtsfeldgröße ferner in Abhängigkeit von einer Fahrsituation gesteuert wird, die aus mindestens einer Eingangsgröße abgeleitet wird.

4. Verfahren nach Anspruch 3, **dadurch gekennzeichnet, dass** mindestens eine Eingangsgröße einem Datensystem des Kraftfahrzeugs entnommen wird.

5. Verfahren nach einem der Ansprüche 3 oder 4, **dadurch gekennzeichnet, dass** mindestens eine Eingangsgröße von Sensoren zugeführt wird.

6. Verfahren nach einem der Ansprüche 3 bis 5, **dadurch gekennzeichnet, dass** mindestens eine Eingangsgröße von einem Bildauswertungssystem aus den aufgenommenen Bildern gewonnen wird.

7. Videosystem für ein Kraftfahrzeug mit einer Videokamera und einer Einrichtung zur Einstellung der Gesichtsfeldgröße, wobei die Gesichtsfeldgröße in Abhängigkeit von verschiedenen Funktionen des Videosystems steuerbar ist, **dadurch gekennzeichnet, dass** die Gesichtsfeldgröße ferner von einer Fahrsituation abhängig ist, die aus mehreren Eingangsgrößen abgeleitet wird und dass eine erste Tabelle zur Ableitung einer Fahrsituation aus den zugeführten Eingangsgrößen und eine zweite Tabelle zur Bildung einer Steuergröße zur aus der abgeleiteten Fahrsituation für verschiedene Funktionen des Videosystems vorgesehen sind.

8. Videosystem nach Anspruch 7, **dadurch gekennzeichnet, dass** ferner eine Abhängigkeit von mindestens einer Kombination von Funktionen besteht.

## Claims

1. Method for controlling the field view size of a video system having a video camera in a motor vehicle, the field view size being controlled in a manner dependent on different functions of the video system, **characterized in that** a driving situation is derived from a plurality of input variables by means of predefined assessment functions, and **in that** a respective control variable for the field view size is selected for different functions of the video system using the derived driving situation, the derived driving situation being read from a first table as a function of the input variables, and the control variable being read from a second table as a function of the driving situation.

2. Method according to Claim 1, **characterized in that** there is also a dependence on at least one combination of functions.

3. Method according to either of Claims 1 and 2, **characterized in that** the field view size is also controlled in a manner dependent on a driving situation which is derived from at least one input variable.

4. Method according to Claim 3, **characterized in that** at least one input variable is taken from a data system of the motor vehicle.

5. Method according to either of Claims 3 and 4, **characterized in that** at least one input variable of sensors is supplied.

6. Method according to one of Claims 3 to 5, **characterized in that** at least one input variable of an image evaluation system is obtained from the recorded images.

7. Video system for a motor vehicle, having a video camera and a device for setting the field view size, the field view size being able to be controlled in a manner dependent on different functions of the video system, **characterized in that** the field view size is also dependent on a driving situation which is derived from a plurality of input variables, and **in that** a first table for deriving a driving situation from the supplied input variables and a second table for forming a control variable for different functions of the video system from the derived driving situation are provided.

8. Video system according to Claim 7, **characterized in that** there is also a dependence on at least one combination of functions.

## Revendications

1. Procédé de commande de la taille du champ de vision d'un système vidéo doté d'une caméra vidéo dans un véhicule, la taille du champ de vision étant commandée en fonction de différentes fonctions du système vidéo,
**caractérisé en ce que**
à partir de plusieurs grandeurs d'entrée, une situation de conduite est déduite par des fonctions prédéterminées d'évaluation,
**en ce qu'**avec la situation de conduite ainsi déduite, une grandeur de commande de la taille du champ de vision est sélectionnée pour différentes fonctions du système vidéo, la situation de conduite ainsi déduite étant lue comme fonction des grandeurs d'entrée dans un tableau, et
**en ce que** la grandeur de commande qui est une fonction de la situation de conduite est lue dans un deuxième tableau.

2. Procédé selon la revendication 1, **caractérisé en ce qu'**il existe en outre une dépendance dans au moins une combinaison de fonctions.

3. Procédé selon l'une des revendications 1 ou 2, **caractérisé en ce que** la taille du champ de vision est en outre commandée en fonction d'une situation de conduite qui est déduite d'au moins une grandeur d'entrée.

4. Procédé selon la revendication 3, **caractérisé en ce qu'**au moins une grandeur d'entrée est prise dans un système de données du véhicule automobile.

5. Procédé selon l'une des revendications 3 ou 4, **caractérisé en ce qu'**au moins une grandeur d'entrée est apportée par des détecteurs.

6. Procédé selon l'une des revendications 3 à 5, **caractérisé en ce qu'**un système d'évaluation d'image permet d'obtenir au moins une grandeur d'entrée sur des images enregistrées.

7. Système vidéo pour véhicules automobiles, doté d'une caméra vidéo et d'un dispositif d'ajustement de la taille du champ de vision, la taille du champ de vision pouvant être commandée en fonction de différentes fonctions du système vidéo,
**caractérisé en ce que**
la taille du champ de vision dépend en outre d'une situation de conduite déduite de plusieurs grandeurs d'entrée et
**en ce qu'**un premier tableau qui permet de déduire une situation de conduite à partir des grandeurs d'entrée apportées et un deuxième tableau qui permet de former une grandeur de commande à partir de la situation de conduite ainsi déduite sont prévus pour différentes fonctions du système vidéo.

8. Système vidéo selon la revendication 7, **caractérisé en ce qu'**il existe en outre une dépendance dans au moins une combinaison de fonctions.
